Europäisches Patentamt

European Patent Office

Office européen des brevets

(19)

(11) Veröffentlichungsnummer: **0 158 346 B1**

(12) **EUROPÄISCHE PATENTSCHRIFT**

(45) Veröffentlichungstag der Patentschrift: **10.07.91**

(51) Int. Cl.5: **B62D 21/18, B62D 49/06**

(21) Anmeldenummer: **85104379.4**

(22) Anmeldetag: **11.04.85**

(54) **Rahmenteil zur Aufnahme von Biegekräften.**

(30) Priorität: **13.04.84 DE 3413953**

(43) Veröffentlichungstag der Anmeldung:
**16.10.85 Patentblatt 85/42**

(45) Bekanntmachung des Hinweises auf die
Patenterteilung:
**10.07.91 Patentblatt 91/28**

(84) Benannte Vertragsstaaten:
**AT DE FR GB IT**

(56) Entgegenhaltungen:
**EP-A- 0 000 281**      **DE-B- 1 113 848**
**DE-C- 846 964**       **FR-A- 1 051 958**
**GB-A- 1 595 392**      **US-A- 2 300 631**
**US-A- 4 339 148**

(73) Patentinhaber: **DEERE & COMPANY**
**1 John Deere Road**
**Moline, Illinois 61265(US)**

(72) Erfinder: **Teich, Michael**
**Rheinparkstrasse 2**
**W-6800 Mannheim 1(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

## Beschreibung

Die Erfindung bezieht sich auf einen Rahmenteil zur Aufnahme von Biegekräften in einer oder, mehreren aneinandergeflanschten Komponenten eines Arbeitsfahrzeuges, wobei der Rahmenteil an einer oder mehreren Komponenten mittels Klemmittel befestigt ist.

Rahmenteile dienen in aller Regel dazu, Komponenten von Arbeitsfahrzeugen wie einen Vorderachsbock, einen Antriebsmotor, ein Schwungradgehäuse, ein Kupplungsgehäuse, ein Getriebegehäuse, Achsteile usw. miteinander zu verbinden, um entweder den Aufbau des Arbeitsfahrzeuges zu vereinfachen, oder als konstruktive Verstärkung dessen Chassis'. Man unterscheidet hierbei eine Halbrahmen- von einer Vollrahmenbauweise, wobei bei der Vollrahmenbauweise ein Gesamtrahmen vorhanden ist, in den die Komponenten eingebaut werden, während bei der Halbrahmenbauweise der oder die Rahmenteile nur zwei oder mehr Komponenten miteinander verbinden, um die Festigkeit an deren Verbindungsstelle zu erhöhen oder auftretende Biege- und/oder Torsionskräfte an einer Komponente vorbeizuleiten.

So ist ein Rahmenteil für einen Ackerschlepper in Halbrahmenbauweise bekannt (Leyland Tractors ETB 5/H 79), der U-förmig dessen Vorderteil umfaßt und der in seinem rückwärtigen Endbereich zu jeder Seite des Ackerschleppers mit dem Schwungradgehäuse und in seinem vorderen Endbereich mit dem Vorderachsbock verschraubt ist, während er an dem sich zwischen dem Schwungradgehäuse und dem Vorderachsbock erstreckenden Antriebsmotor nicht angreift. Dieser Rahmenteil ist aus einem entsprechend gebogenen Flachstahl mit sich in Richtung auf den Vorderachsbock geringfügig verringernder Höhe hergestellt und bildet zudem ein Traggestell für an den vorderteil des Ackerschleppers anzuhängende Ballastgewichte.

Die Verwendung immer schwerer werdender Geräte in der Landwirtschaft, die an die Frontseite oder das Heck von Ackerschleppern angebaut werden, führt zu stets größer werdenden Belastungen, insbesondere Biege- und Torsionsbelastungen, auf das Chassis und somit auf die jeweiligen Komponenten des Ackerschleppers, die dazu führen können, daß die Verbindung der einzelnen Komponenten untereinander auch trotz einer Versteifung durch den bekannten Rahmenteil den Belastungen nicht mehr standhält oder Verschiebungen zwischen den Komponenten eintreten, die die Funktion der in diesen angeordneten Elemente beeinträchtigen. Insbesondere bei dem Antriebsmotor können diese Belastungen eine Änderung der Verbrennungscharakteristik und einen erhöhten Verschleiß der umlaufenden Elemente, etwa der Kurbelwelle, hervorrufen.

Die der Erfindung zugrunde liegende Aufgabe wird darin gesehen, den Rahmenteil so zu verbessern, daß er trotz der vorgenannten Belastungen unter optimalem Materialeinsatz die Festigkeit der Verbindung zwischen einzelnen Komponenten erhöht und die Belastungen weitgehendst von einer oder mehreren Komponenten fernhält.

Diese Aufgabe ist gemäß der Erfindung durch die im Kennzeichnenden Teil des Anspruchs 1 definierten Merkmale gelöst worden.

Auf diese Weise kann über die Länge der jeweiligen Schenkel die Größe eines theoretischen Versteifungsdreieckes in der Form des Rahmenteils, das an seinen Endpunkten mit den zugehörigen Komponenten verbunden ist, den auftretenden Belastungen angepaßt werden und diese selbst aufnehmen.

Stehen erfindungsgemäß bei einem in der Biegeebene unterschiedliche Höhen aufweisenden Rahmenteil die Höhen in direktem Verhältnis zu der Größe des maximal auf das Arbeitsfahrzeug einwirkenden Biegemomentes, dann unterliegt der Rahmenteil überall der gleichen Biegespannung, und Gewaltbrüche an Stellen von Spannungssprüngen werden vermieden.

Bei einem Rahmenteil für ein auch auf Torsion beanspruchtes Arbeitsfahrzeug, wobei zwischen dem Rahmenteil und wenigstens einer der Komponenten ein Freiraum verbleibt, ist es nach der Erfindung besonders vorteilhaft, wenn der Rahmenteil mit einem diesen Freiraum ausfüllenden Profilelement versehen ist. Der Vorteil hierbei liegt darin, daß zur Übernahme der Torsionsbelastung der Rahmenteil im Grunde nicht geändert werden muß, sondern daß er lediglich durch das Profilelement, das in seinen Abmessungen der Größe des maximal auftretenden Torsionsmomentes angepaßt werden kann, verstärkt wird, wobei das Profilelement durch seine Unterbringung in dem ohnehin vorhandenen Freiraum nicht störend wirkt.

Dadurch, daß der Erfindung entsprechend die Klemmittel Kegelbundschrauben sind, die in entsprechend angefaste Bohrungen in dem Rahmenteil einsetzbar sind, entsteht eine äußerst schlüssige Verbindung zwischen dem Rahmenteil und den betreffenden Komponenten, die eine Krafteinleitung in den Rahmenteil gewährleistet und verhindert, daß sich die Komponenten relativ zu dem Rahmenteil bewegen.

Nach einem weiteren Vorschlag der Erfindung ist vorgesehen, daß bei einem Rahmenteil, wobei die Komponenten ein nicht mit dem Rahmenteil verbundener Antriebsmotor, ein Vorderachsbock und ein Schwungradgehäuse sind, der sich in Richtung der Biegekräfte erstreckende Schenkel an dem Schwungradgehäuse und der andere Schenkel an dem Vorderachsbock angebracht ist und/oder der Übergang zwischen den sich abgelegenen Endpunkten der Schenkel bogenförmig verläuft. Eine kostengünstige und einfache Aufnahme
der Torsionsbelastung wird entsprechend der Erfindung dadurch erreicht, daß das Profilelement ein
U-Profil ist, das an seinen Schenkeln mit dem
Rahmenteil verschweißt ist, wobei ein sich zwischen dem U-Profil und dem Rahmenteil ergebender Freiraum zur Durchführung von Leitungen und
Kabelbäumen genutzt werden kann.

In der Zeichnung ist ein nachfolgend näher
beschriebenes Ausführungsbeispiel der Erfindung
dargestellt. Es zeigt:

    Fig. 1    einen Ackerschlepper in Seitenansicht,
    Fig. 2    einen Rahmenteil des Ackerschlep-
            pers in Voderansicht und
    Fig. 3    den Rahmenteil in Seitenansicht.

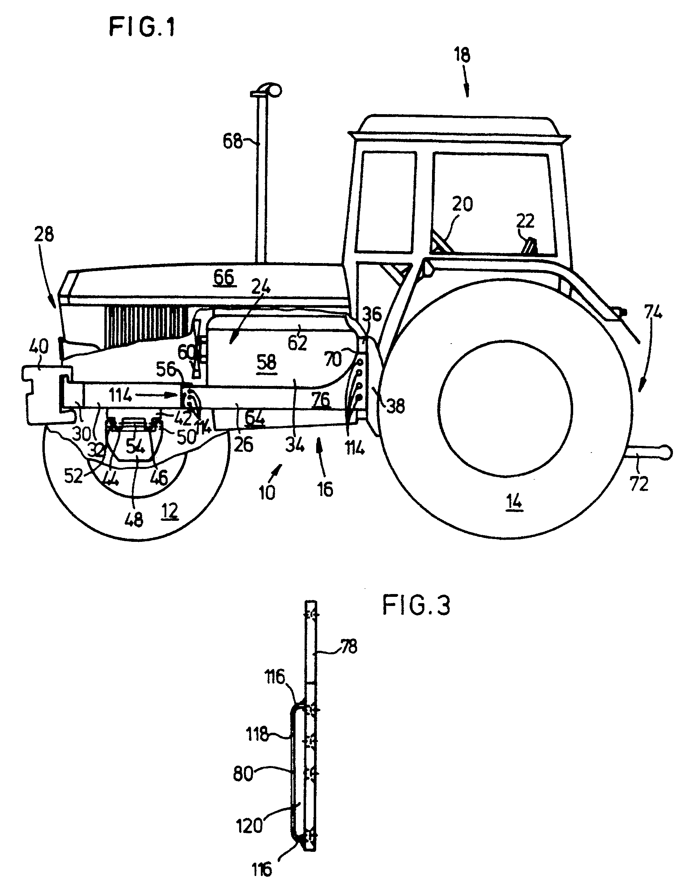

Ein in Fig. 1 mit 10 bezeichnetes Arbeitsfahrzeug in der Art eines Ackerschleppers besteht im
wesentlichen aus einem von Vorderrädern 12 und
Hinterrädern 14 getragenen Chassis 16, auf dem
über den Hinterrädern 14 eine Fahrerkabine 18 mit
herkömmlichen Bedienungselementen 20 und einem Fahrersitz 22, auf die jedoch nicht näher eingegangen wird, befestigt ist. Das Chassis 16 ist in
Halbrahmenbauweise mit einem aus mehreren
Komponenten bestehenden selbsttragenden Block
24 und einem Rahmen 26 ausgeführt, wobei in
selbsttragender Bauweise von einer Vorderseite 28
des Ackerschleppers 10 beginnend, d. h. mit Bezug auf Fig. 1 von links, ein Grundgewicht 30, ein
Vorderachsbock 32, ein Antriebs- oder Verbrennungsmotor 34, ein Schwungradgehäuse 36, ein
Kupplungsgehäuse 38 und ein in der Zeichnung
durch ein Hinterrad 14 verdecktes Getriebegehäuse aufeinanderfolgen, deren jeweilige Verbindung
in herkömmlicher Weise durch nicht gezeigte
Schrauben, Stehbolzen und Paßschrauben an sich
zugelegenen Flächen erfolgt. Auf Einzelheiten über
die Art der Verbindung wird der Einfachheit halber
nicht näher eingegangen.

Das Grundgewicht 30 dient der formschlüssigen Aufnahme einer Mehrzahl von Ballastgewichten 40. So können beispielsweise vierzehn Ballastgewichte 40 von jeweils 42 kg Gewicht angehängt
und auf dem Grundgewicht 30 festgelegt werden.

Der Vorderachsbock 32 ist an seiner Unterseite
mit einem Lagerbock 42 versehen, von dem aus
sich zwei Lageraugen 44 nach unten weg erstrek-
ken. In die Lageraugen 44 sind Bohrungen 46
eingebracht, die in der vertikalen Längsmittenebene des Ackerschleppers 10 liegen und parallel zu
dessen Aufstandsebene ausgerichtet sind.

Die Vorderräder 12 sind an einer Vorderachse
48 angebracht, die gegebenenfalls mit Getriebeelementen zum Übertragen einer Antriebskraft auf die
Vorderräder 12 ausgerüstet sein kann. Diese Vorderachse 48 weist an ihrer Oberseite ebenfalls zwei Lageraugen 50 mit zugehörigen Bohrungen 52 auf,
die in der gleichen Weise wie die Bohrungen 46
angeordnet sind. Indem die Bohrungen 46 und 52
miteinander in Fluchtung gebracht und über einen
Lagerbolzen 54 miteinander verbunden werden, der
mittels nicht dargestellten Spannstiften oder Sicherungsmuttern axial gehalten wird, kann die Vorderachse 48 an dem Lagerbock 42 pendelnd aufgehängt werden. Sie kann demnach um eine in der
vertikalen Längsmittenebene des Ackerschleppers
10 parallel zu dessen Aufstandsebene ausgerichtete, durch den Lagerbolzen 54 führende Achse vertikal pendeln, wobei die maximalen Pendelausschläge dann erreicht sind, wenn die Vorderachse 48 an
dem Vorderachsbock 32 anschlägt, was vorkommen kann, wenn der Ackerschlepper 10 durch eine
größere Vertiefung wie einen Graben oder eine
tiefe Furche fährt. Der Vorderachsbock 32 ist rückwärtig an seinen Seitenflächen maschinell bearbeitet, um eine plane Anlagefläche 56 zu bilden, in die
vier in Fig. 1 verdeckte Gewindebohrungen eingearbeitet sind, deren Zweck später eingehend erläutert wird.

Rückwärtig an den Vorderachsbock 32 schließt
der Verbrennungsmotor 34 an, von dem in der
Zeichnung ein Motorblock 58, ein Gebläserad 60,
ein Zylinderkopf 62 und eine Ölwanne 64 zu erkennen sind.

Von der Vorderseite 28 des Ackerschleppers
10 bis zu dem rückwärtigen Ende des Verbrennungsmotors 34, das ungefähr dem vorderen Ende
der Fahrerkabine 18 entspricht, erstreckt sich eine
den Vorderachsbock 32 und den Verbrennungsmotor 34 abdeckende Haube 66, aus der nach oben
ein Auspuffrohr 68 austritt.

An dem rückwärtigen Ende des Verbrennungsmotors 34 ist das Schwungradgehäuse 36 angeflanscht, das in der Längsrichtung des Ackerschleppers 10 relativ kurz ist und zugleich eine
Verbindung zu dem Kupplungsgehäuse 38 herstellt. Auch an die Seitenflächen des Schwungradgehäuses 36 ist jeweils eine Anlagefläche 70 maschinell angearbeitet, und diese werden von jeweils
vier in der Zeichnung nicht ersichtlichen Gewindebohrungen durchdrungen, die mit den Gewindebohrungen in dem Vorderachsbock fluchten. Die
maschinell bearbeitete Anlagefläche an dem
Schwungradgehäuse 36 erstreckt sich nahezu über
dessen gesamte Höhe. Letztlich schließt an das
Kupplungsgehäuse 38 das Getriebegehäuse an,
von dem aus sich seitlich nicht gezeigte Achstrichter zur drehbaren Aufnahme der Hinterräder 14
erstrecken. Im rückwärtigen unteren Bereich des
Getriebegehäuses sind bis rückwärtig der Hinterräder 14 sich erstreckende untere Lenker 72 einer
Dreipunktgerätekupplung 74 schwenkbar angelenkt,
die gemeinsam mit einem nicht gezeichneten oberen Lenker zum Anbau eines Arbeitsgerätes an das Heck des Ackerschleppers 10 dienen.

Dieser selbsttragende Block 24 wird von jeweils einem Rahmenteil 76 auf jeder Seite des Ackerschleppers 10 zu der Halbrahmenbauweise ergänzt. Die Rahmenteile 76 sind spiegelbildlich zueinander ausgebildet, weshalb es genügt, wenn im folgenden nur der in Richtung der Vorwärtsfahrt links gelegene Rahmenteil 76 beschrieben wird, während diese Beschreibung auch auf den rechten Rahmenteil analog anzuwenden ist.

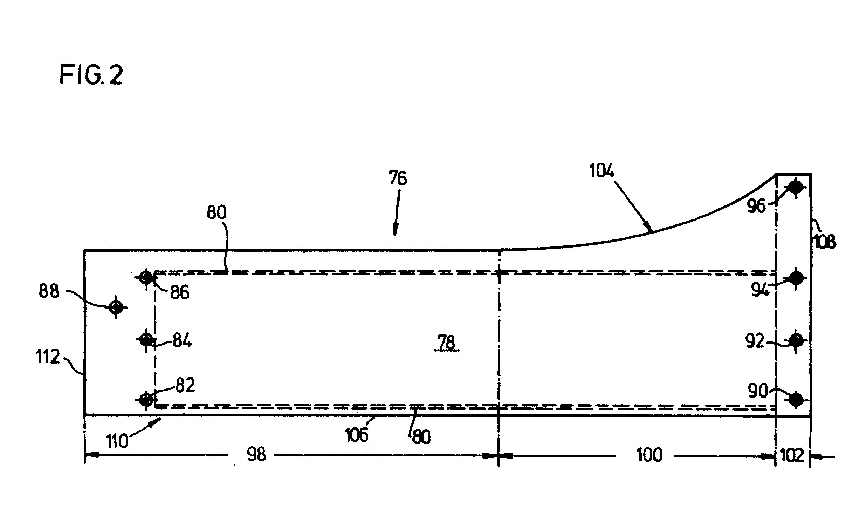

Die Einzelheiten des Rahmenteils sind am besten den Figuren 2 und 3 zu entnehmen, auf die im folgenden Bezug genommen wird. Der Rahmenteil 76 wird aus einem Flachstahl 78 und einem Profilelement in der Form eines U-Profils 80 zusammengesetzt, wobei der Flachstahl 78 an dem vorderen in Fig. 2 links gelegenen Ende und an dem rückwärtigen in Fig. 2 rechts gelegenen Ende jeweils mit vier Bohrungen versehen ist, die zum Unterscheiden fortan mit vorderen und rückwärtigen Bohrungen 82, 84, 86, 88 und 90, 92, 94, 96 bezeichnet werden. Die Bohrungen 82 bis 96 sind derart in dem Flachstahl 78 angeordnet, daß die vorderen Bohrungen 82 bis 88 mit den Gewindebohrungen in dem Vorderachsbock 32 und die rückwärtigen Bohrungen 90 bis 96 mit den Gewindebohrungen in dem Schwungradgehäuse 36 fluchten, wenn der Rahmenteil 76 an die Anlageflächen 56, 70 angelegt worden ist.

Der Flachstahl 78 stellt theoretisch einen Winkelhebel dar und ist optisch in einen vorderen, einen mittleren und einen rückwärtigen Abschnitt 98, 100 und 102 gegliedert, wobei der Flachstahl 78 jedoch nur aus einem einzigen Teil besteht. Der vordere Abschnitt 98 weist die Form eines flach liegenden Rechteckes von ca. 547 mm Breite und 200 mm Höhe auf, während der rückwärtige Abschnitt 102 die Form eines aufrechtstehenden Rechteckes von ca. 48 mm Breite und ca. 319 mm Höhe einnimmt, wobei beide jeweils einen Schenkel des Winkelhebels bilden. Der mittlere Abschnitt 100 weist eine Breite von ca. 385 mm auf und verläuft in einem Bogen 104 mit einem Krümmungsradius von ca. 700 mm von der Höhe des vorderen Abschnittes 98 aus auf die Höhe des rückwärtigen Abschnittes 102. Die unteren Kanten 106 des vorderen, des mittleren und des rückwärtigen Abschnittes 98, 100 und 102 liegen auf einer Linie.

Die rückwärtigen Bohrungen 90 bis 96 befinden sich alle in dem rückwärtigen Abschnitt 102 und liegen auf einer Linie, die parallel zu einer rückwärtigen Kante 108 des rückwärtigen Abschnittes 102 im Abstand von ca. 18 mm verläuft.

Die vorderen Bohrungen 82 bis 88 befinden sich im vordersten Viertel 110 des vorderen Abschnittes 98, wobei drei Bohrungen 82, 84, 86 davon ebenfalls den gleichen Abstand zu einer vorderen Kante 112 des vorderen Abschnittes 98 aufweisen und diese drei Bohrungen 82 bis 86 jeweils die gleichen Abstände zu der unteren Kante 106 einnehmen wie drei rückwärtige Bohrungen 90, 92, 94. Die vierte vordere Bohrung 88 ist zwischen der in der Mitte gelegenen und der oberen Bohrung 84, 86 und in Richtung auf die vordere Kante 112 des vorderen Abschnittes 98 versetzt angeordnet, während die vierte rückwärtige Bohrung 96 sich oberhalb der drei Bohrungen 90 bis 94 befindet, die mit den drei vorderen Bohrungen 82 bis 86 korrespondieren. Alle vorderen und rückwärtigen Bohrungen 82 bis 96 sind von der Außenseite der Rahmenteile 76 her unter einem Winkel von 76° angefast und bilden somit einen Kegelpaßsitz für aus Kegelbundschrauben 114 bestehende Klemmittel, mit deren Hilfe die Rahmenteile 76 an die Anlageflächen 56, 70 angeschraubt werden.

Das U-Profil 80 ist aus einem Flachstahl gebogen, ist ca. 805 mm lang, 180 mm hoch und so gekröpft, daß Schenkel 116 von jeweils 20 mm Länge entstehen. Das U-Profil 80 wird zum Verbinden mit dem Flachstahl 78 mit seinen Schenkeln 116 auf die Innenseite des Flachstahles 78 aufgesetzt und derart ausgerichtet, daß die Schenkel 116 parallel zu der unteren Kante 106 des Flachstahls 78 liegen, der untere der Schenkel 116 mit einem Abstand von ca. 8 mm zu dieser verläuft und das U-Profil 80 als Ganzes mittig zwischen den drei vorderen und den drei rückwärtigen miteinander korrespondierenden Bohrungen 82 bis 86 und 90 bis 94 liegt. Anschließend wird das U-Profil 80 an die Innenseite des Flachstahles 78 angeschweißt. Durch die Befestigung des U-Profils 80 an der Innenseite des Flachstahles 78 derart, daß die Schenkel 116 und nicht ein diese verbindender Steg 118 an dem Flachstahl 78 angeschweißt werden, ergibt sich, abhängig von der Wahl der Länge der Schenkel 116, ein mehr oder weniger großer endseitig offener Zwischenraum 120 zwischen dem U-Profil 80 und dem Flachstahl 78, der zur Durchführung und Halterung von Kabelbäumen, Hydraulikleitungen und ähnlichem genutzt werden kann.

Zum Einsatz des Ackerschleppers 10 kann dieser über seine Dreipunktgerätekupplung 74 mit einem Arbeitsgerät, etwa einem Pflug, einer Scheibenegge oder einer Saatbettkombination, verbunden werden. Diese in der Regel sehr gewichtsträchtigen Arbeitsgeräte üben zusammen mit den an der Vorderseite 28 des Ackerschleppers 10 angebauten Ballastgewichten 40 ein nach oben gerichtetes Biegemoment auf das Chassis 16 aus, das die Verbindungsstellen des selbsttragenden Blockes 24 hoch beanspruchen würde, wenn die Rahmenteile 76 nicht vorhanden wären. Der Betrag des Biegemomentes wird noch erhöht, wenn anstatt der frontseitig angebauten Ballastgewichte 40 eine Frontgerätekupplung mit einem Düngerstreuer, einer Bodenfräse oder einem weiteren Pflug angebracht ist. Diesem Biegemoment können sich zusätzlich Torsionsmomente überlagern, die entstehen, wenn die Vorderachse 48 beim Pendeln an den Vorderachsbock 32 anschlägt und versucht, den selbsttragenden Block 24 in sich zu verdrehen. Diese Biege- und Torsionsmomente aufzunehmen ist die Aufgabe der Rahmenteile 76. Die Bemessung des Flachstahles 78 und insbesondere die Krümmung des Bogens 104 des mittleren Abschnittes 100 erfolgt in Abhängigkeit von der Belastung durch das Biegemoment, so daß im Bereich des größten Biegemomentes der Rahmenteil 76 am stärksten ausgebildet ist und wenigstens annähernd einen "Träger gleicher Biegespannung" darstellt. Die Befestigung der Rahmenteile 76 vor und hinter dem Verbrennungsmotor 34 gewährleistet, daß das Biegemoment weitgehendst an diesem vorbeigeleitet wird. Zudem bewirkt die große Angriffsfläche des Rahmenteils 76 an dem Schwungradgehäuse 36 eine gleichmäßige Kräfteeinleitung in das Schwungradgehäuse 36.

Zur Aufnahme des Torsionsmomentes ist das U-Profil 80 vorgesehen, das die Verwindungssteifigkeit des Rahmenteils 76 erhöht und in seinen Abmessungen ebenfalls der Größe des Torsionsmomentes angeglichen werden kann. Die Verwendung von Kegelbundschrauben 114, die unter einem vorher festgelegten Anzugsmoment angezogen werden, bietet Gewähr für eine rutschfeste Anlage der Rahmenteile 76 an den Anlageflächen 56, 70, die auch ständigen Lastwechseln widersteht.

Im allgemeinen ist der Verbrennungsmotor 34 in Richtung der Längsmittenebene des Ackerschleppers 10 schmaler ausgebildet als der Vorderachsbock 32 und als das Schwungradgehäuse 36, so daß sich zwischen dem jeweiligen Rahmenteil 76 und der zugehörigen Seitenfläche des Verbrennungsmotors 34 ein Freiraum ergibt, der von dem U-Profil 80 vollkommen eingenommen werden kann und dessen Größe zugleich die größtmögliche Ausbildung des U-Profils 80 und somit dessen größtmögliche Torsionsmomentenaufnahme bestimmt. Es kann ferner für das U-Profil 80 ein anderer Werkstoff benutzt werden als für den Flachstahl 78, so daß auch durch die Auswahl der Werkstoffe, solange sie nur miteinander verschweißbar sind, eine Optimierung der Biege- und Torsionssteifigkeit erzielt werden kann. Durch die Ausnutzung des sich zwischen dem Verbrennungsmotor 34 und dem Flachstahl 78 ergebenden Freiraumes durch das U-Profil 80 ist es ferner möglich, die Außenmaße des Chassis' 16 bei gleichzeitig stabilerer Ausführung beizubehalten, was besonders dann wichtig und von großem Vorteil ist, wenn die Außenmaße für den Anbau der Frontgerätekupplung und evtl. eines Frontladers festgelegt

sind.

**Ansprüche**

1. Rahmenteil (76) zur Aufnahme von Biegekräften in einer oder mehreren aneinandergeflanschten Komponenten (32, 34, 36, 38) eines Arbeitsfahrzeuges, wobei der Rahmenteil (76) an einer oder mehreren Komponenten (32 bis 38) mittels Klemmittel (114) befestigt ist, dadurch gekennzeichnet, daß der Rahmenteil (76) als Winkelhebel mit wenigstens zwei sich in der Biegeebene erstreckenden Schenkeln (98, 102) ausgebildet ist die außerhalb eines biegegefährdeten Bereichs einer Komponente an der oder anderen Komponenten angebracht sind und deren Abmessungen in direktem Verhältnis zu der Größe des maximal auf die betreffende Komponente einwirkenden Biegemoments stehen.

2. Rahmenteil nach Anspruch 1, der in der Biegeebene unterschiedliche Höhen aufweist, dadurch gekennzeichnet, daß die Höhen in direktem Verhältnis zu der Größe des maximal auf das Arbeitsfahrzeug (10) einwirkenden Biegemomentes stehen.

3. Rahmenteil (76) nach Anspruch 1 oder 2 für ein auch auf Torsion beanspruchtes Arbeitsfahrzeug(10), wobei zwischen dem Rahmenteil (76) und wenigstens einer der Komponenten (34) ein Freiraum verbleibt, dadurch gekennzeichnet, daß der Rahmenteil (76) mit einem diesen Freiraum ausfüllenden Profilelement (80) versehen ist.

4. Rahmenteil nach einem oder mehreren der vorherigen Ansprüche, dadurch gekennzeichnet, daß die Klemmittel (114) Kegelbundschrauben sind, die in entsprechend angefaste Bohrungen (82 bis 96) in dem Rahmenteil (76) einsetzbar sind.

5. Rahmenteil nach einem oder mehreren der vorherigen Ansprüche, wobei die Komponenten (32 bis 38) ein nicht mit dem Rahmenteil (76) verbundener Antriebsmotor (34), ein Vorderachsbock (32) und ein Schwungradgehäuse (36) sind, dadurch gekennzeichnet, daß der sich in Richtung der Biegekräfte erstreckende Schenkel (102) an dem Schwungradgehäuse (36) und der andere Schenkel (98) an dem Vorderachsbock (32) angebracht ist.

6. Rahmenteil nach einem oder mehreren der vorherigen Ansprüche, dadurch gekennzeichnet, daß der Übergang zwischen den sich abgelegenen Endpunkten der Schenkel (98, 102) bogenförmig verläuft.

7.   Rahmenteil nach einem oder mehreren der vorherigen Ansprüche, dadurch gekennzeichnet, daß das Profilelement (80) ein U-Profil ist, das an seinen Schenkeln (116) mit dem Rahmenteil (76) verschweißt ist.

## Claims

1.   Frame part (76) for absorbing bending forces in one or more flanged together components (32. 34. 36. 38) of a working vehicle. wherein the frame part (76) is fixed to one or more components (32 to 38) by means of clamping means (114), characterized in that the frame part (76) is formed as an angled lever with at least two arms (98,102) extending in the bending plane, which arms are fitted outside a region of a component prone to bend to the or other components and whose dimensions are directly related to the size of the maximum bending moment acting on the component in question.

2.   Frame part according to claim 1. which has differing heights in the bending plane, characterized in that the heights are directly related to the size of the maximum bending moment acting on the working vehicle (10).

3.   Frame part according to claim 1 or 2. for a working vehicle (10) also subjected to torsion, wherein a free space exists between the frame part (76) and at least one of the components (34), characterized in that the frame part (76) is provided with a profiled element (80) occupying this free space.

4.   Frame part according to one or more of the preceding claims, characterized in that the clamping means (114) are conically headed screws, which can fit into correspondingly chamfered bores (82 to 96) in the frame part (76).

5.   Frame part according to one or more of the preceding claims, wherein the components (32 to 38) are a drive engine (34) not connected to the frame part (76), a front axle support (32) and a flywheel housing (36), characterized in that the arm (102) extending in the direction of the bending forces is fitted to the flywheel housing (36) and the other arm (98) to the front axle support (32).

6.   Frame part according to one or more of the preceding claims, characterized in that the transition between the remote end points of the arms (98, 102) runs in an arc.

7.   Frame part according to one or more of the preceding claims, characterized in that the profiled element (80) is a U-profile which is welded to the frame part (76) at its arms (116).

## Revendications

1.   Elément de châssis (76) destiné à recevoir des forces de flexion dans un ou plusieurs composants réunis par brides (32, 34, 36, 38) d'un véhicule de travail, l'élément de châssis (76) étant fixé à un ou plusieurs composants (32 à 38) par des moyens de serrage (114), caractérisé en ce que l'élément de châssis (76) se présente sous la forme d'un levier coudé comportant au moins deux branches (98, 102) s'étendant dans le plan de flexion, qui sont placées en dehors d'une zone sujette à la flexion d'un composant sur le ou les autres composants et dont les dimensions sont en proportion directe de la valeur du couple de flexion maximum agissant sur le composant concerné.

2.   Elément de châssis selon la revendication 1, qui présente des hauteurs variables dans le plan de flexion, caractérisé en ce que les hauteurs sont en proportion directe de la valeur du couple de flexion maximum agissant sur le véhicule de travail (10).

3.   Elément de châssis (76) selon la revendication 1 ou 2 pour un véhicule de travail (10) subissant également des contraintes de torsion, un espace libre subsistant entre l'élément de châssis (76) et l'un au moins des composants (34), caractérisé en ce que l'élément de châssis (76) comporte un élément profilé (80) comblant cet espace libre.

4.   Elément de châssis selon une ou plusieurs des revendications précédentes, caractérisé en ce que les moyens de serrage (114) sont des vis d'assemblage à embase conique, qui peuvent être introduites dans des alésages (82 à 96) biseautés de façon correspondante, formés dans l'élément de châssis (76).

5.   Elément de châssis selon une ou plusieurs des revendications précédentes, les composants (32 à 38) étant un moteur d'entraînement (34) non relié à l'élément de châssis (76), un support d'essieu avant (32) et un carter-volant (36), caractérisé en ce que Ta branche (102) s'étendant dans la direction des forces de flexion est placée sur le carter-volant (36) et l'autre branche (98) sur le support d'essieu avant (32).

6. Elément de châssis selon une ou plusieurs des revendications précédentes, caractérisé en ce que le raccordement entre les points extrêmes des branches (98, 102) éloignés l'un de l'autre est arqué.

7. Elément de châssis selon une ou plusieurs des revendications précédentes, caractérisé en ce que l'élément profilé (80) est un profil en U qui est soudé, à ses branches (116), à l'élément de châssis (76).

FIG.1

FIG.3

FIG. 2

EP 0 158 346 B1